# EUROPEAN PATENT SPECIFICATION

(11) **EP 2 705 925 B1**
(45) Date of publication and mention of the grant of the patent: **24.01.2018**
(21) Application number: 12151339.4
(22) Date of filing: 22.02.2012
(51) Int. Cl.: B23P 15/00, F04D 29/02, F04D 29/16, F04D 29/22

(54) **Method of enhancing wear resistance of the centrifugal pump parts**
Verfahren zur Verbesserung der Verschleißfestigkeit von Zentrifugalpumpenteilen
Procédé d'amélioration de la résistance contre l'usure de pièces de pompes centrifuges

(30) Priority: 16.09.2011 BY 20111212
(43) Date of publication of application: 12.03.2014
(73) Proprietor: King Abdulaziz City for Science & Technology (KACST), 11442 Riyadh (SA); V.A. Belyi Metal-Polymer Research Institute of National Academy of Science of Belarus, 246050 Gomel (BY); Institute of Chemistry of New Materials The National Academy of Sciences of Belarus, 220141 Minsk (BY)
(72) Inventor: Selkin, Vladimir Petrovich, 246012 Gomel (BY); Sosnovsky, Sergei Vasilyevichlast, 246000 Gomel (BY); Al-Saud, Turki Saud Mohammed, 11442 Riyadh (SA); Binhussain, Mohammed A., 11442 Riyadh (SA); Agabekov, Vladimir Enokovich, 220035 Minsk (BY)
(74) Representative: Goddar, Heinz J.

(56) References cited:
- WO-A1-01/32948
- WO-A1-01/44533
- WO-A1-2005/038062
- JP-A- H10 122 117
- US-A- 4 551 603
- US-A1- 2002 064 667

## Description

The invention is related to methods of obtaining at least two combined coatings made out of metal material namely to methods of obtaining of wear resistant details of centrifugal pumps. Document WO 2005/038062 A1 proposes a method for increasing the wear resistance of parts of a centrifugal pump. As is known, coefficient of efficiency duty (CED or "efficiency") of centrifugal pumps takes into account their mechanical, hydraulic and volumetric losses. Thus, volumetric losses of centrifugal pumps are caused by the presence of clearances in slot-hole sealings that are located between their working wheels and the body or between sealing rings (rings of friction). These slot-hole sealings separate the areas of high and low pressure (suction and forcing chambers of the pump) in centrifugal pumps. The way of increasing the efficiency of centrifugal pumps (US 5873697) has been proposed in order to lower the volumetric losses and correspondingly increase the CED value. In the patent it is proposed to use sealing rings made of thermoplastic polymer material, which, due to its coefficient of thermal expansion that is different from the one of working wheel's metal, will lead to the decrease of the value of clearance between inner diameter of the sealing ring and outer diameter of the working wheel. This method allows to increase the efficiency of centrifugal pump s, but because of non-sufficient abrasive stability of polymeric material it is not effective when the pump is working on the liquids containing significant amount of abrasive impurities, for example the liquid obtained from boreholes of water or raw oil. In this case constant increase of clearance value and consequently the decrease of pump's efficiency takes place during the exploitation because of mechanic wear process. Main methods of decreasing volumetric losses of centrifugal pumps that are pumping the liquids containing abrasive impurities, are the measures on the increase of wear resistance of material of working wheels and sealing rings, in particular, application of metals on their surfaces that are exposed to wearing process. The method of obtaining of wear-resistant coatings from metal alloys on engine parts made out of metals which is the closest in technical terms and in terms of positive effect being achieved, is known (US 5080056). The method includes manufacturing of the Part with the size of the surface that is exposed to wear, less than the needed one, application of coating made of aluminum bronze by melting and its final mechanical treatment to desired size. The use of wear resistant aluminum bronze that is not exposed to corrosion in fresh and salty water allows to employ this method successfully for the increase of wear resistance of details of slot-hole sealings of centrifugal water pumps. But the resistance of existing kinds of aluminum bronze to abrasive wear appears to be not sufficient enough when pumps are working on water, containing high concentration of abrasive particles, such as sand.

It is an object of the present invention to provide a method for increasing of the rare resistance of parts of a centrifugal pump which overcomes the drawbacks of the prior art. Particularly, a method for increasing of wear resistance of the working surface of the details of slot-hole sealings of centrifugal pumps used for pumping of water, raw oil and other liquids containing abrasive particles.

This problem is solved by a method for increasing the wear resistance of parts of a centrifugal pump comprising the steps: a) making of the part with wear portion having dimension different than required, b) applying at least one coating of an aluminum-bronze alloy to the denoted portion of the part by means of welding deposition, c) machining it and subsequent applying a hard alloy coating by electroerosion deposition, wherein said machining is prosecuted to the stage that allows obtaining the final required dimension after said hard alloy deposition.

Preferably, the upper coating consists of two or more hard alloy layers.

In a further preferred embodiment, said hard alloy layers have the same composition.

Even preferred, the starting alloy for the hard alloy deposition consists of 6-12 % cobalt and 88-94 % carbides of tungsten, chromium and vanadium.

Preferably, said welding deposition is produced by using electric arc.

In a preferred embodiment, said aluminum-bronze alloy consists of 6-10 % aluminum, 9-18 % manganese, iron and nickel, and the rest is copper.

Finally preferred the said coatings are deposited on a surface of an impeller or a wear ring of said centrifugal pump at the groove seal area which separates the chamber of intake and injection of said pump.

It was surprisingly found that the inventive method provides the possibility to increase the wear resistance of parts of a centrifugal pump which is used for pumping of water raw oil and other liquids containing abrasive particles.

The method, according to the invention, is conducted as described below:
At first the detail of a centrifugal pump, for example, the working wheel or sealing ring with the size of the surface that is most exposed to abrasive wear different from the needed one by the thickness of a protective coating, which is planned to be applied on a surface, is manufactured. After that the layer of aluminum bronze coating is melted on this surface using, for example, welding half-automatic machine for MIG/MAG welding of metals. Alloys based on copper containing 6-10 % of aluminum and 9-18% of manganese, iron and nickel are reasonable to use as aluminum bronze. These alloys are applied well on steel surfaces, they are sufficiently wear resistant and have high corrosion resistance to water, including salty (sea) water. After that mechanical treatment (turning, milling or grinding depending on the detail) of melted layer of aluminum bronze down to the size, that is different from needed one by the thickness of additional solid-alloyed coating is conducted. Then solid-alloyed coating based on small-grained carbides of metals, for example tungsten, vanadium and chromium, is applied using electro-erosion method on the upper layer of aluminum bronze coating. The process is conducted by means of electrical erosion of the electrode made of solid alloy and transfer of metal carbide particles on detail's surface. Different kinds of single-carbide and multi-carbide solid alloys containing 6-12% of cobalt (binding agent) and metal carbides (tungsten, vanadium, chromium) can be used as a material for the electrode. As a result microhardness of the upper layer of protective coating increases by several times or by several tenth of times (up to 19000 MPa by Vickers) depending on the thickness of the layer and a kind or solid alloy. As experiments show, alloys containing less than 6% or more than 12 % of cobalt are not reasonable to be used due to lowering of wear resistance of protective coating caused by its surface becoming fragile in first case and lowering of micro-solidness in a second case. It is preferable to use solid alloys based on tungsten carbide with the additions of vanadium and chromium carbides due to high solidness and wear resistance. Electro-erosion application of a coating is conducted using standard equipment for strengthening-alloying electro-erosion treatment of metals. Regimes of work of equipment and the model of device are chosen depending on a required thickness of layer of solid-alloyed coating and given n productivity of the process. In particular, maximally achieved thickness of layer of solid-alloyed coating and given productivity of the process of its application directly depend on the value of current when the working current value is 0.5-20 A. It is desirable to apply two or more layers of solid-alloyed coating (up to 10 layers) in order to achieve bigger uniformity of coating and to reduce the roughness of its surface.

Additional features and advantages of the present invention will become apparent in the following detailed description in the basis of examples.

### Example.

Hardening of the surface of working wheel of multi-sectional centrifugal water pipe was conducted. The material of the working wheel is moulding steel, the diameter of the surface being hardened is 254.0 mem. At first, mechanical treatment of the surface of the working wheel in the area of slot-hole-sealing, separating suction and forcing chambers, down to the size, different from needed one by thickness of a protective coating (down to diameter 252.0 mm) was conducted on the lathe. After that aluminum bronze coating was melted on this surface. Melting was conducted using Nobitec SW 5 17 wire - (the composition of melted metal- 6.5 % of aluminum, 2.6 % of nickel, 12.5 % of manganese, 0.02 % of lead, the rest is copper) diameter 0.8 mm in inert gas medium (argon) on welding half-automatic apparatus KIT-384. Melting was conducted in automatic regime, the working wheel was fixed on a welder's table DT 300. After the application of aluminum bronze coating the mechanical treatment of it was conducted on a lathe down to the size lesser than needed by the thickness of a planned soilalloyed coating (30 µm). Thickness of a coating was 0.97 mm. The hardness (following to Vickers) of aluminum bronze coating was 220 MPa. The hardness was measured on micro-hardomer PMT-3M as an average of 5 measures. After that five layers of light-alloyed coating were applied until its thickness was 30 µm according to the invention being submitted. The final diameter of the working wheel on the surface being strengthened is 254.0 mm. The application of solid-alloyed coating was conducted using the device WOCAFIX Typ 2020. The application was made in automatic regime when the working wheel was tixed on rotating table of a welder DT 300. Hardness of the obtained solid-alloyed coating was 1800 MPa. The rod made of solid alloy U8 made by TRIBO Hartmetall, melted from the powder with the size of a grain 0.5 pm (8% of cobalt, 91 % of tungsten carbide, I % of chromium and vanadium carbides), was used as an electrode.

Besides this, tests on abrasive wear resistance during the friction of the surfaces, applied according to the prototype and the invention, being submitted, in water were conducted additionally on the specimen of melted steel, containing 0.3 % of carbon. The technology and the application equipment totally corresponded to the description, listed in the example of coatings application on a working wheel. Tests of specimen were conducted on the device meant for the evaluation of abrasive resistance of materials of details of centrifugal pumps slot-hole sealings. The device is made based on friction machine CMT-1. Scheme of friction: rotating shaft (roller of high hardness) - still partial loose leaf (the specimen being tested). During the tests contact surface of the loose leaf with applied coating was situated at some distance (slot-hole clearance on the line of closest rapprochement of surfaces 0.2 mm). Flow of the liquid (water) was delivered to the clearance and abrasive particles (sand with friction composition 100-300 pm). The suction of particles to the clearance took place due to roller's rotation and, consequently, abrasive wear of materials of opposite surfaces occurred). Speed of rotation of a roller is 1500 rotationsimin, duration of tests - 100 hours. Results are presented in the following table:

**Table**

| Tests results: | Prototype | According to the invention |
|---|---|---|
| Hardness of a coating (acc. to Vickers), MPa | 220 | 1800 |
| Wear of the coating during friction in water with sand, µm | 7 | 1 |

Therefore, the method according to the invention compared with the prototype provides substantial increase of micro-hardness of the surface and smaller values of intensity of its wear during friction in water containing abrasive particles. Tests were conducted by the researchers of the Institute of mechanics of metal-polymer Systems named after V.A. Belyi of National Academy of Sciences of Belarus.

The features disclosed in the foregoing description and in the claims may both separately or in any combination be material for realizing the invention in different forms thereof.

## Claims

1. A method for increasing the wear resistance of parts of a centrifugal pump **characterized by** comprising the steps:
a) making of the part with wear portion having dimension different than required,
b) applying at least one coating of an aluminum-bronze alloy to the denoted portion of the part by means of welding deposition,
c) machining it and subsequent applying a hard alloy coating by electroerosion deposition,
wherein said machining is prosecuted to the stage that allows obtaining the final required dimension after said hard alloy deposition.

2. The method according to claim 1, wherein the upper coating consists of two or more hard alloy layers.

3. The method according to claim 2, wherein said hard alloy layers have the same composition.

4. The method according to any of the preceding claims, wherein the starting alloy for the hard alloy deposition consists of 6-12 % cobalt and 88-94 % carbides of tungsten, chromium and vanadium.

5. The method according to any of the preceding claims, wherein said welding deposition is produced by using electric arc.

6. The method according to claim 5, wherein said aluminum-bronze alloy consists of 6-10 % aluminum, 9-18 % manganese, iron and nickel, and the rest is copper.

7. The method according to any of the preceding claims, wherein the said coatings are deposited onto a surface of an impeller or a wear ring of said centrifugal pump at the groove seal area which separates the chambers of intake and injection of said pump.

## Patentansprüche

1. Verfahren zum Steigern der Abriebswiderstandsfähigkeit von Teilen einer Zentrifugalpumpe, **dadurch gekennzeichnet, dass** dieses die Schritte umfasst:
a) Herstellen des Teils mit Verschleißteil, das eine Abmessung hat, die von der erforderlichen Abmessung abweicht,
b) Anwenden zumindest einer Beschichtung von einer Aluminium-Bronze Legierung auf den besagten Teil des Teils mittels Auftragsschweißen,
c) Bearbeiten desselben und anschließendes Anwenden einer Hartlegierungsbeschichtung durch Elektroerosionsabscheidung,
wobei besagtes Bearbeiten zu dem Zeitpunkt durchgeführt wird, der es erlaubt, die final erforderliche Abmessung nach der Abscheidung der besagten Hartlegierung zu erhalten.

2. Verfahren nach Anspruch 1, wobei die obere Beschichtung aus zwei oder mehr harten Legierungsschichten besteht.

3. Verfahren nach Anspruch 2, wobei die besagten harten Legierungsschichten die gleiche Zusammensetzung haben.

4. Verfahren nach einem der vorangehenden Ansprüche, wobei die Startlegierung für die besagte Hartlegierungsabscheidung aus 6 bis 12% Cobalt und 88 bis 94% der Carbide von Wolfram, Chrom oder Vanadium besteht.

5. Verfahren nach einem der vorangehenden Ansprüche, wobei besagte Schweißabscheidung unter Verwendung eines elektrischen Lichtbogens hergestellt wird.

6. Verfahren nach Anspruch 5, wobei die besagte Aluminium-Bronze Legierung aus 6 bis 10% Aluminium, 9 bis 18% Mangan, Eisen und Nickel besteht und der Rest Kupfer ist.

7. Verfahren nach einem der vorangehenden Ansprüche, wobei die besagten Beschichtungen auf einer Oberfläche eines Flügelrads oder eines Schließrings der besagten Zentrifugalpumpe an der Rillenversiegelungsfläche abgeschieden ist, die die Kammer vom Einlass oder Einspritzung der besagten Pumpe trennt.

## Revendications

1. Procédé d'augmentation de la résistance contre l'usure de pièces d'une pompe centrifuge **caractérisé en ce qu'**il
comprend les étapes :
a. de fabrication de la pièce dont la portion exposée à l'usure présente une dimension différente de celle requise,
b. d'application d'au moins un revêtement d'alliage de bronze d'aluminium sur la portion désignée de la pièce par dépôt par soudure,
c. d'usinage de la pièce et d'application ultérieure d'un revêtement d'alliage dur par dépôt par électroérosion,
ledit usinage étant réalisé jusqu'à ce que la dimension finale requise après ledit dépôt d'alliage dur puisse être obtenue.

2. Procédé selon la revendication 1, dans lequel le revêtement supérieur est composé de deux couches d'alliage dur ou plus.

3. Procédé selon la revendication 2, dans lequel lesdites couches d'alliage dur présentent la même composition.

4. Procédé selon l'une quelconque des revendications précédentes, dans lequel l'alliage de départ servant au dépôt d'alliage dur est composé de 6 à 12 % de cobalt et de 88 à 94 % de carbures de tungstène, de chrome et de vanadium.

5. Procédé selon l'une quelconque des revendications précédentes, dans lequel ledit dépôt par soudure est produit en utilisant un arc électrique.

6. Procédé selon la revendication 5, dans lequel ledit alliage de bronze d'aluminium est composé de 6 à 10 % d'aluminium, de 9 à 18 % de manganèse, de fer et de nickel, le reste étant du cuivre.

7. Procédé selon l'une quelconque des revendications précédentes, dans lequel lesdits revêtements sont déposés sur une surface d'un impulseur ou d'une bague d'usure de ladite pompe centrifuge dans la zone de la rainure d'étanchéité qui sépare les chambres d'entrée et d'injection de ladite pompe.
